# FASCICULE DE BREVET EUROPEEN

(11) **EP 2 727 052 B1**
(45) Date de publication et mention de la délivrance du brevet: **28.12.2022**
(21) Numéro de dépôt: 12735234.2
(22) Date de dépôt: 22.06.2012
(51) Int. Cl.: G06K 19/077

(54) **DISPOSITIF PORTABLE AVEC DES CONTACTS ÉLECTRIQUES AJOURÉS**
TRAGBARES GERÄT MIT GELOCHTEN ELEKTRISCHEN KONTAKTEN
PORTABLE DEVICE WITH APERTURED ELECTRICAL CONTACTS

(30) Priorité: 01.07.2011 EP 11305857
(43) Date de publication de la demande: 07.05.2014
(73) Titulaire: Thales Dis France SAS, 92190 Meudon (FR)
(72) Inventeur: MERLIN, Lionel, F-13119 Saint Savournin (FR); LAHOUI, Nizar, F-13400 Aubagne (FR); BUYUKKALENDER, Arek, F-13013 Marseille (FR); DOSSETTO, Lucile, F-83270 Saint Cyr Sur Mer (FR); ROBERTET, Laurence, F-13420 Gemenos (FR); BRONDINO, Catherine, F-13120 Biver (FR); SEBAN, Frédérick, F-13260 Cassis (FR)
(74) Mandataire: Milharo, Emilien
(86) Numéro de dépôt international: PCT/EP2012/062153
(87) Numéro de publication internationale: WO 2013/004522

(56) Documents cités:
- FR-A1- 2 797 976
- US-A1- 2009 271 972

## Description

### Domaine de l'invention.

La présente invention concerne des dispositifs portatifs à puce électronique.

En particulier, elle concerne des dispositifs portables électroniques comportant un support recevant sur une face arrière une antenne reliant un microcircuit électronique et une face comportant des plages de contacts s'étendant au moins en partie jusqu'au bord de la face.

On trouve de tels dispositifs notamment parmi les étiquettes électroniques et les cartes à puce sans-contact, hybrides à contacts et sans-contact pourvues d'un module électronique.

Une norme usuelle mais nullement limitative pour la présente invention est celle dite ISO 7810 qui correspond à une carte de format standard de 85 mm de longueur, de 54 mm de largeur, et de 0,76 mm d'épaisseur. Les contacts sont définis par la norme 7816 notamment en ce qui concerne leur positionnement et étendue.

### Etat de l'art.

On connait la demande de brevet EP 1 492 148 A2 de la demanderesse qui décrit le principe d'un module antenne comportant un substrat portant sur une face arrière une antenne radiofréquence bobinée à plat et sur une face avant des plages de contacts pour communiquer avec un lecteur à contacts.

On connait également le brevet EP 1031939 (B1) qui décrit une carte à puce de type hybride à performance radiofréquence améliorée. Elle décrit une carte comportant un module antenne du type ci-dessus couplé magnétiquement avec une antenne relais disposée dans le corps de carte.

Le brevet FR2765010 (B1) décrit un module antenne à interface duale également. L'antenne est disposée en périphérie des contacts électriques pour s'affranchir d'un écran aux ondes radiofréquences formé par les plages de contacts et améliorer ainsi la communication radiofréquence. La perméabilité électromagnétique du module est ainsi améliorée.

La demande de brevet US2009/0271972 décrit une carte à puce sans contact utilisant un module à puce sans contact comportant des plages de connexion perforées. Ces plages sont perforées d'origine ou lors d'une opération de couture par une aiguille de couture. Ces perforations contiennent un fil d'antenne métallique qui demeure à l'intérieur des perforations lorque l'antenne est connectée aux plages de connexions.

La demande de brevet EP 1932104 (A1) illustrée à la figure 1 décrit également un module antenne 11 couplé avec une antenne relais dans une carte à puce et comportant des moyens améliorant la perméabilité magnétique. Il enseigne de placer l'antenne en périphérie des plages de contact 19 sur la face arrière opposée à celle portant les plages de contact et de placer en périphérie et à l'extérieur des plages de contact, une pluralité de protubérances 33 s'étendant sensiblement des plages vers la périphérie du module. Cette disposition a pour effet, outre celui d'apporter une perméabilité électromagnétique, de contribuer à répartir une pression de collage du module dans une cavité de corps de carte lors de la phase de report de module.

Les protubérances peuvent constituer des obstacles et/ou usures pour certains connecteurs de lecteurs lors de l'introduction de la carte dans la fente du lecteur.

La demande de brevet FR 2 797 976 A1 décrit un procédé de connexion de module de carte à puce hybride (contact et sans-contact). Le procédé prévoit de faire une micro perforation dans une première puis une seconde plage de contact à des fins de connexion d'une antenne placée en dessous, dans un corps de carte à puce. Chaque perforation est remplie de matière électriquement conductrice par la suite pour la connexion entre chaque plage d'interconnexion de l'antenne et chaque plage du module ayant une perforation.

L'invention a pour objectif d'éviter les inconvénients ci-dessus.

La présente invention vise également une construction du module permettant une réduction des coûts de réalisation tout en conservant les performances de perméabilité électromagnétique par rapport à une antenne de communication radiofréquence notamment selon la norme ISO/IEC 14443.

Le principe de l'invention consiste le plus possible à concevoir des plages de contact, pistes électriques évidées ou disposer des perforations calibrées jusqu'à un maximum, sur ces parties métalliques en dehors des zones normalisées.

A cet effet l'invention est exposée dans le jeu de revendications joint.

Selon d'autres caractéristiques :
- Une face arrière du support comprend une antenne formée d'un ensemble de spires comportant deux extrémités de connexion et en ce que la pluralité de perforations forme des zones de perméabilité magnétique pour l'antenne ;
- Les perforations sont disposées en périphérie du dispositif et/ou au centre, l'antenne étant disposée sensiblement au moins en partie en regard de ces zones magnétiquement perméables ;
- Les perforations sont disposées sur le parcours (F) des plots de contact d'un connecteur de lecteur à contact électrique lorsque le dispositif est introduit dans la fente d'un lecteur ;
- Les plages de contact ont leur largeur réduite vers le bord du support.

### Description des figures.

L'invention sera mieux comprise en se référant à la description suivante faite à titre d'exemple non limitatif et aux dessins ci-annexés, dans lesquels:
- la figure 1 représente un module pour carte sans contact selon l'état de la technique;
- la figure 2 représente en coupe transversale, un module pour carte à contact selon un mode de réalisation l'invention;
- la figure 3 représente en coupe transversale, un module pour carte hybride sans contact selon un second mode de réalisation de l'invention;
- la figure 4 représente en coupe transversale, un module à antenne pour carte hybride sans-contact selon un second mode de réalisation de l'invention;
- les figures 5A à 5D représentent en vue de dessus des variantes de réalisation des plages de contact d'un module électronique, conformes à l'invention.

### Description détaillée de l'invention.

Des éléments similaires sont désignés par les mêmes numéros de référence dans l'ensemble des figures.

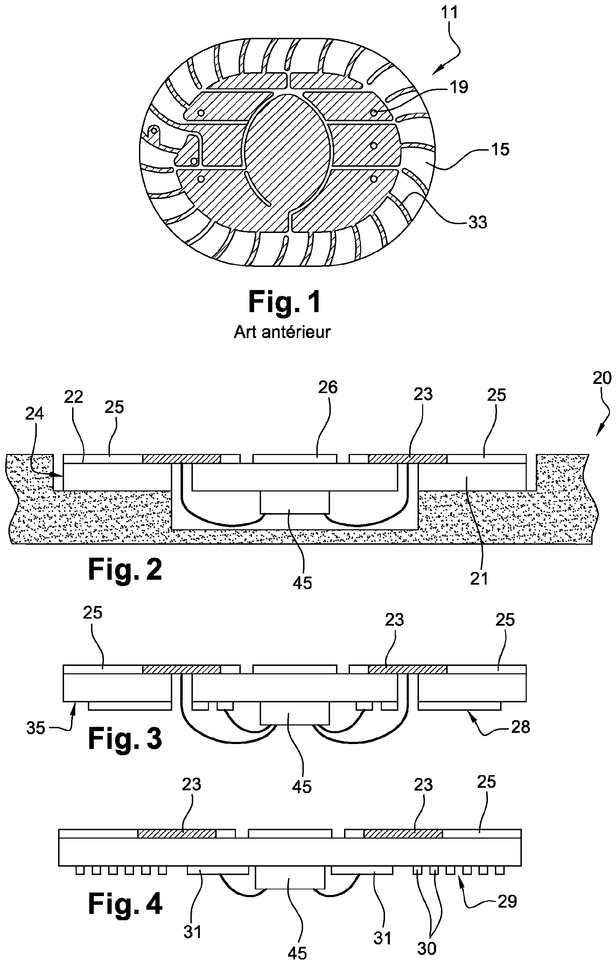

A la figure 2, un dispositif portable électronique 20 comporte un support 21 et une face 22 du support comportant des plages de contacts 23 s'étendant au moins en partie jusqu'au bord 24 de la face. Ces plages sont connectées électriquement à un microcircuit électronique 45.

Le dispositif est ici dans l'exemple une carte à puce à contacts électrique et le support est un substrat isolant de module électronique 20 pour carte à puce. Le module est encarté dans un corps 25 de carte à puce. Alternativement, le dispositif peut être le module lui-même.

Selon l'invention, des plages de contact conductrices comprennent une pluralité de perforations 27.

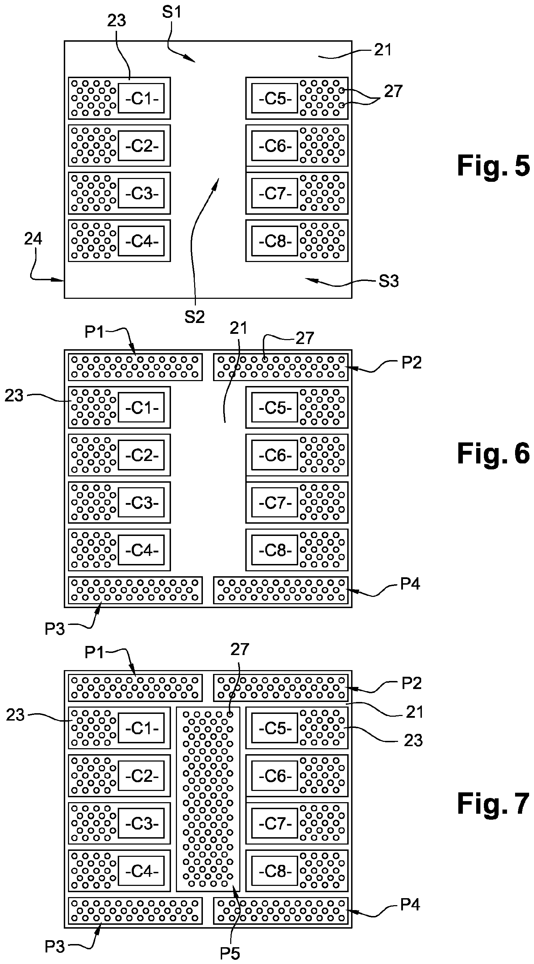

Dans le cas des cartes à puce, les perforations peuvent être localisées dans des zones 25, 26 distinctes des zones de contact normalisées C1-C8 (fig. 5-8).

Dans l'exemple, une pluralité de perforations sont par exemple sous forme de rond mais peuvent avoir d'autres formes géométriques.

La somme totale des surfaces ainsi enlevées doit être suffisante pour permettre une réelle économie de matières telles que l'or, palladium, Nickel... tout en assurant une rigidité suffisante pour être conforme aux exigences de fiabilité des produits obtenus par exemple de type micro module.

Les performations sont effectuées lors de la fabrication même du film par gravure chimique ou par découpe mécanique en même temps que les contacts.

Des trous de 300µm de diamètre semblent être un bon compromis par rapport aux surfaces de contact des connecteurs et une tenue mécanique aux tests de flexion/torsion grâce à la rigidité du module : pas d'effets de marche, pas de fragilisation de la partie électronique. Les trous peuvent être de préférence compris entre 250 et 350 µm de diamètre ou présenter une surface équivalente.

Cependant en fonction du modèle voulu et des évolutions technologiques des fournisseurs de substrat de module dit « leadframe » (substrat comprenant ou supportant des plages de contact), cette dimension peut être variable.

Le module peut être découpé dans le cuivre ou dans le film support diélectrique pour l'aspect corrosion. Le cuivre dans ce dernier cas ne se retrouve pas en effet mis à nu sur sa tranche ce qui limite les phénomènes de corrosion. L'espace entre le bord du module et les zones électriques peuvent être toutefois suffisamment réduit pour ne pas créer d'effet de marche d'escalier ou pour les connecteurs de lecteur de carte.

Il n'y a pas de risque de fluage de résine (collage de la puce, résine d'encapsulation...) lors de l'assemblage dans la mesure où celle-ci est déposée sur une zone où le diélectrique est plein ou dans le cas contraire (cas d'une fenêtre centrale, zones de soudure), sur une zone où les perforations dans le cuivre sont absentes.

Les perforations selon l'invention étant faites partout en dehors des zones C1-C8 définies par l'ISO 7816. Les perforations étant faites partiellement (ex : sur les plages de contact mais pas à la masse, ou inversement voir fig. 5-8) ou étant limitées sur certaines zones des plages de contacts ne relevant pas de linvention et ne son présents qu'a titre illustratif.

A la figure 3, le module est un module pour carte combi (ou à interface duale) dans laquelle l'antenne est dans un corps de carte comme 25 (non représenté). Le module comporte ici des métallisations 28 sur les deux faces 25 et 35. Ces métallisations peuvent être également perforées.

A la figure 4, le module est un module à antenne. Il reçoit sur une face arrière une antenne 29 formée d'un ensemble de spires 30 comportant deux extrémités de connexion 31. Ces extrémités 31 sont connectées à des plots de la puce électronique.

De manière avantageuse, les perforations forment des zones de perméabilité magnétique pour l'antenne.

Les perforations peuvent être disposées en périphérie du dispositif et/ou au centre (fig.7) ; Les spires de l'antenne sont disposées sensiblement au moins en partie en regard de ces zones magnétiquement perméables.

Selon une caractéristique de l'invention, les perforations sont disposées en dehors d'un parcours (flèche F) des plots de contact d'un connecteur de lecteur à contact électrique lorsque le dispositif est introduit dans la fente d'un lecteur.

Les perforations sont disposées en périphérie du dispositif ou au centre ; les spires sont disposées sensiblement en regard de ces zones perméables magnétiquement.

L'invention peut concerner toute forme de module où un nombre 6, 8 de plages de contact est nécessaire. D'autres types de module (combi plug-in), simple face, double face type combi, module antenne et toute nouvelle application ayant une face avec des contacts électriques.

On connait les plages de contact électriques sous forme de parallélépipèdes (voir fig. 5), mais ces dernières peuvent prendre d'autres formes qui permettent quand même une bonne « amenée » des contacts aux connecteurs.

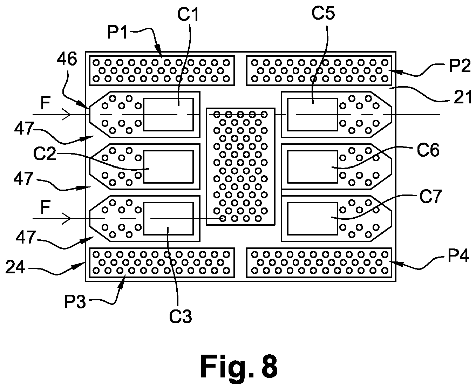

En particulier, comme illustré à la figure 8, les plages ont leur largeur 46 réduite en s'approchant d'un bord 24 au moins correspondant au bord d'introduction dans un lecteur. Les bords des contacts sont par exemple sensiblement en forme de « V ». La pointe du V et sensiblement centrée sur le parcours des connecteurs lors de l'introduction dans le lecteur.

Ainsi, cette forme en « V » permet de dégager des zones de perméabilité magnétique 47 entre de plages de contact adjacentes l'une de l'autre.

Avantageusement, les plages de contact ne contiennent aucune perforation ou un minimum de perforations disposées sur le parcours rectiligne F des connecteurs de lecteur qui est perpendiculaire à un bord 24 du module.

Ainsi, les connecteurs glissent toujours sur des parties sensiblement pleines 49 de matière conductrice, évitant ainsi une usure prématurée de connecteurs et/ou plages de contact.

A la figure 5, les plages de contact 23 sont étendues jusqu'au bord du module. Le substrat diélectrique 21 présente une surface plus étendue S1 dans la partie supérieure S1 et inférieure S2 du module.

La partie centrale S3 située entre les zones C1- C8 est dépourvue également de surface métallique.

A la figure 6 et 7, les surfaces S1, S2, S3 visées précédemment sont pourvues de parties P1-P5 comportant du métal perforé. L'avantage de ces parties est d'éviter des marches pour les connecteurs mais aussi de favoriser une bonne répartition de pression de collage sur le module lors de sa fixation dans une cavité de corps de carte et/ou rigidité du module.

Le dispositif peut concerner un jeton radiofréquence de type RIFD, une clé USB dotée ou non d'une fonction radiofréquence, tout dispositif électronique à puce de circuit intégré comportant des pistes conductrices ayant un minimum de surface plus ou moins imposée par sa fonction. Les perforations permettent de gagner 20 à 50 % de métal relatif aux contacts électriques sans diminuer leur fonction électrique ou résistance mécanique.

Les pistes conductrices ou plages de connexions à l'arrière du module (fig. 3) peuvent être également perforées.

Les métallisations peuvent recevoir ou comprendre un comblement isolant partiel ou total (résine ou autre isolant notamment plastique) qui permet notamment d'avoir des largeurs de perforations plus larges supérieures à 350 µm par exemple comprise entre 350 µm et 1000 µm voire plus : 3000 µm, tout en évitant le problème de marche (ou rape) susmentionné vis à vis d'un connecteur de lecteur. Le module peut également être renforcé par ce remplissage des perforations.

Les perforations sont donc exemptes et maintenues exemptes de métal ou de matière électriquement conductrice au moins à l'intérieur notamment pour économie ou pour perméabilité magnétique.

Les métallisations peuvent être évidées de métal ou être formées avec leurs évidements dès leur formation.

Les perforations peuvent avoir d'autres formes comme par exemples des zigzags, des fentes rectilignes, courbes, ondulations....

Toute obstruction totale ou partielle à l'intérieur des perforations ou en regard de ces perforations est donc exclue à priori ; Le cas échéant, par exception, des spires d'antenne peuvent être disposées en regard des perforations pour des raisons de perméabilité magnétique (pas uniquement des extrémités de connexion comme dans le document US2009/0271972).

Les spires sont de préférence disposées sur une face d'un substrat (ou d'un support) opposée à celle portant les métallisations.

## Revendications

1. Dispositif portable électronique (20) comprenant ou constituant un module de carte à puce et comportant un support (21) recevant sur une face (22) des plages de contacts (23) ou pistes conductrices reliant un microcircuit électronique (45), lesdites plages de contact ou pistes conductrices étant conformes à la norme ISO 7816 et comprenant chacune une pluralité de perforations (27), **caractérisé en ce que** lesdites perforations ou évidements sont exempts de métal à l'intérieur et sont en dehors des zones C1-C8 définies par la norme ISO 7816.

2. Dispositif portable électronique selon la revendication précédente, **caractérisé en ce qu'**une face arrière (35) du support comprend une antenne (29) formée d'un ensemble de spires (30) comportant deux extrémités de connexion (31) et **en ce que** la pluralité de perforations ou d'évidements forme des zones (25) de perméabilité magnétique pour l'antenne.

3. Dispositif portable électronique selon la revendication précédente, **caractérisé en ce que** les perforations ou évidements sont disposés en périphérie du dispositif et/ou au centre, l'antenne étant disposée sensiblement au moins en partie en regard de ces zones (25) magnétiquement perméables.

4. Dispositif portable électronique selon l'une quelconque des revendications précédentes, **caractérisé en ce que** les perforations ou évidements sont disposés sur le parcours (F) des plots de contact d'un connecteur de lecteur à contact électrique lorsque la dispositif est introduit dans la fente d'un lecteur.

5. Dispositif portable électronique selon l'une quelconque des revendications précédentes, **caractérisé en ce que** les plages de contact ont leur largeur (46) réduite vers le bord (24) du support.

6. Dispositif portable électronique selon l'une quelconque des revendications précédentes, **caractérisé en ce que** les perforations ou évidements ont un diamètre compris entre 250 et 350 µm.

## Patentansprüche

1. Tragbare elektronische Vorrichtung (20), die ein Chipkartenmodul umfasst oder bildet und einen Träger (21) aufweist, der auf einer Seite (22) Kontaktflächen (23) oder Leiterbahnen aufnimmt, die einen elektronischen Mikroschaltkreis (45) verbinden, wobei die Kontaktflächen oder Leiterbahnen der Norm ISO 7816 entsprechen und jeweils eine Vielzahl von Perforationen (27) umfassen, **dadurch gekennzeichnet, dass** die Perforationen oder Aussparungen im Inneren metallfrei sind und sich außerhalb der durch die Norm ISO 7816 definierten Bereiche C1-C8 befinden.

2. Tragbare elektronische Vorrichtung nach dem vorhergehenden Anspruch, **dadurch gekennzeichnet, dass** eine Rückseite (35) des Trägers eine Antenne (29) umfasst, die aus einer Anordnung von Windungen (30) gebildet ist, die zwei Verbindungsenden (31) aufweist, und **dass** die Vielzahl von Perforationen oder Aussparungen Bereiche (25) magnetischer Permeabilität für die Antenne bildet.

3. Tragbare elektronische Vorrichtung nach dem vorhergehenden Anspruch, **dadurch gekennzeichnet, dass** die Perforationen oder Aussparungen am Rand der Vorrichtung und/oder in der Mitte angeordnet sind, wobei die Antenne im Wesentlichen zumindest teilweise gegenüber diesen magnetisch permeablen Bereichen (25) angeordnet ist.

4. Tragbare elektronische Vorrichtung nach einem der vorhergehenden Ansprüche, **dadurch gekennzeichnet, dass** die Perforationen oder Aussparungen auf dem Weg (F) der Kontaktstücke eines elektrisch kontaktierten Lesegerätanschlusses angeordnet sind, wenn die Vorrichtung in den Schlitz eines Lesegeräts eingeführt wird.

5. Tragbare elektronische Vorrichtung nach einem der vorhergehenden Ansprüche, **dadurch gekennzeichnet, dass** die Breite (46) der Kontaktflächen zum Rand (24) des Trägers hin verringert ist.

6. Tragbare elektronische Vorrichtung nach einem der vorhergehenden Ansprüche, **dadurch gekennzeichnet, dass** die Perforationen oder Aussparungen einen Durchmesser zwischen 250 und 350 µm besitzen.

## Claims

1. A portable electronic device (20) comprising or constituting a smart card module and having a support (21) receiving on one face (22) contact pads (23) or conductive tracks connecting an electronic microcircuit (45), said contact pads or conductive tracks conforming to standard ISO 7816 and each comprising a plurality of perforations (27), **characterized in that** said perforations or recesses are free of the metal on the inside and are outside of zones C1-C8 defined by standard ISO 7816.

2. The portable electronic device according to the preceding claim, **characterized in that** one rear face (35) of the support comprises an antenna (29) formed by a set of turns (30) having two connection ends (31) and **in that** the plurality of perforations or recesses forms magnetic permeability zones (25) for the antenna.

3. The portable electronic device according to the preceding claim, **characterized in that** the perforations or recesses are arranged at the periphery of the device and/or at the center, the antenna being arranged substantially at least partially facing these magnetically permeable zones (25).

4. The portable electronic device according to any of the preceding claims, **characterized in that** the perforations or recesses are arranged on the path (F) of the contact pads of a reader connector with electrical contact when the device is inserted into the slot of a reader.

5. The portable electronic device according to any of the preceding claims, **characterized in that** the width (46) of the contact pads is reduced towards the edge (24) of the support.

6. The portable electronic device according to any of the preceding claims, **characterized in that** the perforations or recesses have a diameter comprised between 250 and 350 µm.
